# EUROPEAN PATENT APPLICATION

(11) **EP 2 362 561 A1**
(43) Date of publication of application: **31.08.2011**
(21) Application number: 11153910.2
(22) Date of filing: 09.02.2011
(51) Int. Cl.: H04H 20/62, H04H 60/91, H04H 20/34

(54) **Transmission of radio signals by a portable apparatus**

(30) Priority: 25.02.2010 GB 1003178
(71) Applicant: Nokia Corporation, 02150 Espoo (FI)
(72) Inventor: Potter, Mark, Basingstoke, Hampshire RG22 4RF (GB); White, Paul, Basingstoke, Hampshire RG22 5QY (GB)
(74) Representative: Anderson, Oliver Ben

(57) **Abstract**

A portable apparatus comprises at least one processor configured under control of a software module to detect events and to be responsive to the detection of an event to provide an audio data burst, a radio transmitter configured to encode the audio data burst and to transmit the resulting encoded audio data as part of a radio signal, and a priority flagging module responsive to the provision of an audio data burst by the software module to flag the encoded audio data so as to indicate to a receiver a priority of the audio data burst.

## Description

### Field

The present application relates generally to the transmission of radio signals by a portable apparatus, and in particular to the transmission of radio signals carrying audio data.

### Background

Electronic devices which are capable of audio and/or audiovisual playback, such as music players and mobile phones, are very popular. Such devices, in particular those which are portable or mobile, are mainly intended for use in conjunction with head phones or earphones.

It is now quite common for users of such devices to connect their device to other devices such as car radios or music systems thereby to play audio data stored on their device via the other device. Many audio playback systems in cars comprise frequency modulated (FM) radio receivers. Accessories are available which enable users to connect their device to a car's audio playback system via wireless transmission to the FM receiver.

The invention was made within this context.

### Summary

In a first aspect, this specification describes portable apparatus comprising:
a processor configured under control of a software module to detect events and to be responsive to the detection of an event to provide an audio data burst;
a radio transmitter configured to encode the audio data burst and to transmit the resulting encoded audio data as part of a radio signal; and
a priority flagging module responsive to the provision of an audio data burst by the software module to flag the encoded audio data so as to indicate to a receiver a priority of the audio data burst.

The transmitter is a low power, short range transmitter. The transmitter is configured such that it has an effective transmission in the range of 3 to 10 metres. Thus, signals transmitted by the transmitter can be effectively received in an area that is very local to the transmitter. The transmitter may be, for example, compliant with Rule 15 of the Federal Communication Commission (FCC) of the United States of America, which specifies that the signal power must be 250 µV/m at 3 metres. Alternatively, the transmitter may be compliant with corresponding regulations in jurisdictions other than the USA, such as the Radio and Telecommunications Terminal Equipment Directive in Europe which requires that the power of the transmitter must be less than 50nW effective radiated power. The transmitter may have similar power output specifications to the Nokia® FM Transmitter CA-300.

In a second aspect, this specification describes a method of operating a portable apparatus comprising:
detecting an event;
responding to the detection of the event by providing an audio data burst;
encoding the audio data burst;
priority flagging the resulting encoded audio data so as to indicate to a receiver a priority of the audio data burst; and
transmitting the resulting flagged encoded audio data as part of a radio signal.

In a third aspect, this specification describes portable apparatus comprising:
a processor and memory,
the processor being configured under control of computer code stored in the memory to perform a method comprising:
   detecting an event;
   responding to the detection of the event by providing an audio data burst;
   encoding the audio data burst;
   priority flagging the resulting encoded audio data so as to indicate to a receiver a priority of the audio data burst; and
   transmitting the resulting flagged encoded audio data as part of a radio signal.

In a fourth aspect, this specification describes portable apparatus comprising:
processor means configured under control of a software module to detect events and to be responsive to the detection of an event to provide an audio data burst;
radio transmitter means configured to encode the audio data burst and to transmit the resulting encoded audio data as part of a radio signal; and
priority flagging means responsive to the provision of an audio data burst by the software module to flag the encoded audio data so as to indicate to a receiver a priority of the audio data burst.

### Brief Description of the Drawings

For a more complete understanding of example embodiments of the present invention, reference is now made to the following detailed description taken in connection with the accompanying drawings in which:
Figures 1A and 1B together illustrate the difference between a national or regional transmitter and an ultra-short range transmitter;
Figure 2 is a schematic illustration of the concept of an ultra-short range effective transmission region;
Figure 3 is a schematic block diagram of mobile apparatus according to example embodiments of the present invention;
Figure 4 is a schematic illustration of the mobile apparatus of Figure 3 according to example embodiments of the invention; and
Figure 5 is a flow diagram illustrating an operation of a mobile apparatus according to example embodiments of the invention.

In the Figures, like reference numerals refer to like elements.

### Detailed Description of the Drawings

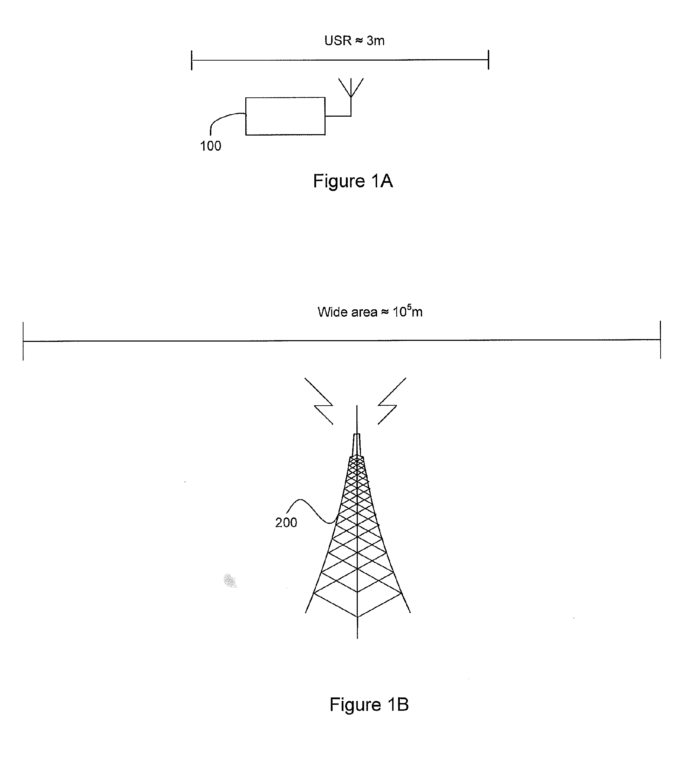

Example embodiments of the present invention and its potential advantages will be understood from the following description considered in conjunction Figures 1 to 5.

Figure 1A is an illustration of a transmission range of personal mobile apparatus 100 comprising an ultra-short range transmitter.

Figure 1B is an illustration of a conventional national or regional radio transmitter 200. The radio transmitter 200 has sufficient power to provide FM radio signals carrying audio data throughout an area having a diameter of tens or hundreds of kilometres. Many FM radio stations now also transmit Radio Data System (RDS) data within the radio signals carrying the audio data. The RDS data is included in the sidebands of the radio signal at 57 kHz, which is three times the FM pilot tone. The RDS data transmitted with the radio signal includes a set of predefined flags, each flag having a different function or meaning.

Traditionally, FM RDS has been implemented in national or regional radio stations having a large area of coverage. RDS services are commonly supported by in-car radio receiver systems. RDS systems generally are intended to provide information about a wide area to many listeners. One of the predefined flags within the RDS system is a Travel Announcement (TA) flag. The TA flag indicates to a receiver that a radio signal currently being, or soon to be, broadcast contains audio data relating to a travel announcement. The TA flag is only active during, or just before, the broadcast of a radio signal carrying audio data relating to a travel announcement.

A TA flag is used in conjunction with Travel Program (TP) flag. A TP flag is used to indicate to a receiver that a particular radio station broadcasts radio signals carrying traffic announcements. The TP flag is normally set by the radio station broadcasting from a transmitter 200 to indicate to receivers that the radio station supports TA functionality in its transmissions. Thus, the receiver is able to determine the identity of radio signals (each relating to a radio station) that will include a TA flag at some time in the future. TA and TP flags are known as service flags.

Receiver apparatuses, for example in-car radio systems, are configured so as to allow the user to receive and listen to traffic reports even if the receiver apparatus is currently playing a Compact Disc (CD) or a cassette, or if the volume of the receiver apparatus is turned down or muted. Receiver apparatuses, when tuned to the transmitter 200, can be set by the user to respond to the TP and TA flags, when they are detected in the RDS data of the radio signal from the transmitter 200. The receiver apparatus may be configured to respond to detecting the presence of the TA flag in the radio signal by pausing a current activity function and changing the audio path (if the user is not currently listen to the radio station associated with the radio signal) from the CD or cassette to the audio of the radio station, thereby allowing the user to listen to the traffic announcement associated with the TA flag. Additionally, the receiver apparatus may be configured also to set the receiver apparatus's volume to a predefined audible level, so as to allow the user to hear the traffic announcement associated with the TA flag. A short time after setting the TA flag, for example 1 to 3 seconds, the audio data associated with the traffic announcement is included in the radio signal.

After the audio data relating to the traffic announcement, the transmitter 200 removes the TA flag. The receiver, on detecting that the TA flag is no longer present in the RDS data of the radio signal, reverts back to its previous mode. In this way a national or regional transmitter 200 can send out traffic announcements that cover a large area. The traffic announcements may not be of relevance or interest to all listeners who hear them.

A similar standard in the United States of America is the Radio Broadcast Data System (RBDS) which is provided by the National Radio Systems Committee in conjunction with the National Association of Broadcasters.

Both the RDS and RBDS standards only specify how the transmitter-side apparatus should operate. The only requirement for the receiver apparatus is that it should be able to interoperate with the transmitter-side apparatus. Consequently, the implementations for the receiver apparatus and the possible delays in responding to detection of a TA flag in a radio signal can vary from device to device.

Referring back to the example of Figure 1A, the radio transmitter of the personal mobile apparatus 100 has sufficient power only to provide ultra-short range (USR) FM transmission. USR transmission is very local to the apparatus. Unlicensed FM transmission must comply with the local regulations so as to ensure that the transmission range is not too large.

In the United States of America, the Federal Communications Commission (FCC) provides regulations for the usage of unlicensed (for example personal/private) FM-radio transmissions in FCC Rule 15 (see section 15.239), as revised 1 October 2009. Information from the FCC can be found at WWW.fcc.gov or at FCC offices. Similar legislation to that of the FCC applies in many other countries. FCC Rule 15 defines an allowed signal strength for unlicensed radio transmissions of 250 µV/m at 3 metres from the antenna within a frequency range of 88 to 108 MHz. The equivalent regulation for Europe is CE EN301357, which imposes the requirement that the effective radiated power of the transmitter must be less that 50nW.

Under FCC regulations (in particular Rule 15), the transmitter apparatus 100 of Figure 1A would be required to transmit radio signals effectively to a distance of 3 metres, with radio signal reception becoming ineffective at a distance in the range of 3 to 10 metres from the transmitter 100. Effective transmission or reception refers to a situation in which a radio signal transmitted by a transmitter is able to be received with a signal-to-noise ratio (SNR) such that the audio data carried therein is able to be decoded and output by receiver apparatus such that a listener is able to hear and decipher the audio data.

The transmitter apparatus 100 depicted in the example of Figure 1A can be considered as an FCC compliant mobile device providing audio data over ultra-short range FM radio transmission.

USR FM radio transmission of audio data is suitable for allowing users to listen to audio stored on portable apparatus (such as transmitter apparatus 100) via other systems having FM radio signal reception capability, such as in-car radios.

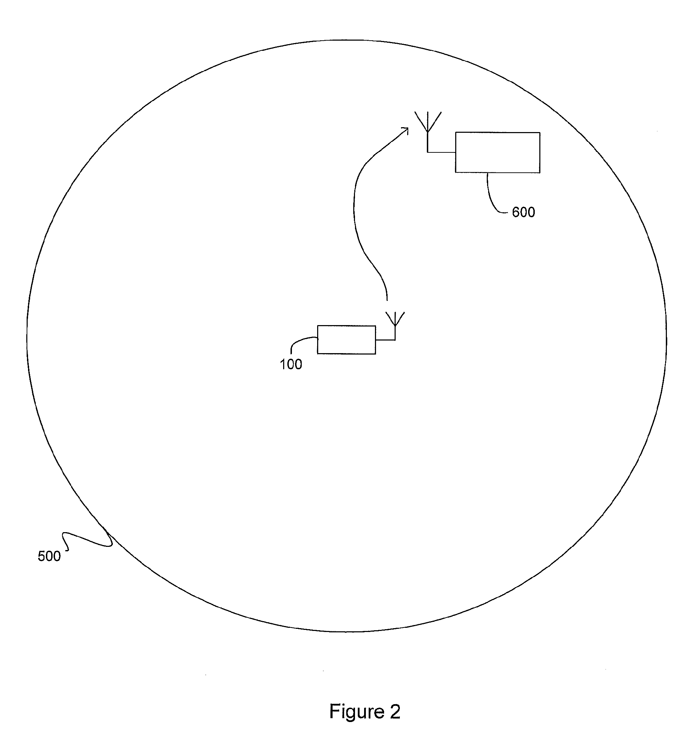

Figure 2 is a schematic illustration of the concept of an ultra-short range effective transmission region 500. The figure shows a personal mobile apparatus 100, such as that in Figure 1, transmitting radio signals to a receiver apparatus 600, for example an in-car radio. The receiver apparatus 600 is able to effectively receive signals from the mobile apparatus 100, when it is within the USR effective transmission region 500 of the personal mobile apparatus 100. The size of the USR effective transmission region 500 may be in accordance with FCC Rule 15, or with other similar regulations from other jurisdictions. Under the FCC rules identified above the testing of a compliant transmitter is performed at 3 metres and in typical use scenarios the receiver apparatus 200 becomes unable to receive effectively radio signals transmitted by the mobile apparatus 100 at some point in the range of 3 to 10 metres. Thus, in this context, the USR effective transmission region 500 is defined as an area in which conventional radio signal receiver apparatus is able to receive effectively radio signals from an apparatus which is compliant with regulations relating to the usage of unlicensed FM-radio transmissions. Conventional radio receiver apparatuses include, but are not limited to, in-car radios, personal radios and hi-fi systems.

It should be understood from the above that the USR effective transmission region 500 is very local to the apparatus 100 containing the transmitter. An example is that a transmitted radio signal can be effectively received by an external car antenna, when the transmitter apparatus 100 is within that car. In this way, the apparatus 100 may connect to the in-car audio system. Thus, as long as the receiver apparatus 600 is within the USR effective transmission region 500 of the transmitter apparatus 100, the receiver apparatus 600 can effectively receive radio signals transmitted by the transmitter apparatus 100.

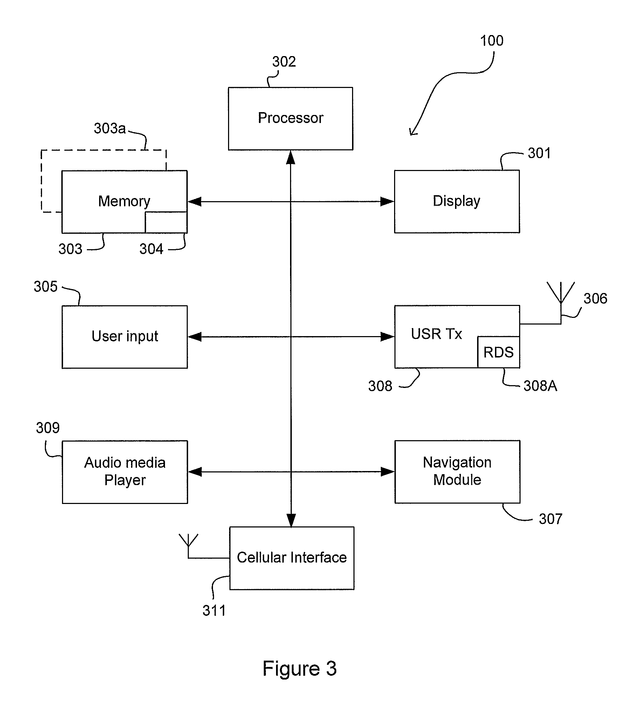

Figure 3 shows a schematic block diagram of a personal mobile apparatus 100 according to an example embodiment of the present invention.

The personal mobile apparatus 100 comprises a processor 302. The personal mobile apparatus 100 is arranged such that the processor 302 interfaces with each of the other components of the personal mobile apparatus 100.

The personal mobile apparatus 100 also comprises a main memory unit 303. The main memory unit 303 may comprise Read Only Memory (ROM) and/or Random Access Memory (RAM). The main memory unit 303 may, for instance, constitute the storage area for computer program memory 304. The program memory may store computer program code relating to one or more software modules and software applications executable by the processor 303. The main memory unit 303 is a non-transitory memory unit such as ROM, EPROM, etc. The main memory unit 303 comprises an additional, optionally removable, memory unit 303a, which may be a computer-readable medium in any of a plurality of forms. For instance, the additional memory unit 303a may be embodied as an electric, magnetic, electromagnetic, optic or other storage medium. The additional memory unit 303a may be a removable medium or may be permanently fixed or installed in the personal mobile apparatus 100. Examples of such a computer-readable medium are RAM and ROM. The computer readable medium may, for instance, be a tangible medium. A computer readable medium is understood to be readable by computing apparatus such as, for instance, the processor 302. The medium may include software code for causing the processor 302 to execute and application and/or may include a key or certificate for enabling the processor 302 to execute a software program stored on the main memory unit 303.

The personal mobile apparatus 100 also comprises a display 301. The display may comprise, but is not limited to, a Light Emitting Diode (LED) display, an Organic LED (OLED) display, a plasma display or a monochrome or colour dot matrix display. The personal mobile apparatus 100 also comprises a user input interface 305. This may comprise, for example, a keyboard, a keypad, a touchpad or a touch screen.

The personal mobile apparatus 100 may include a navigation module 307. The navigation module 307 includes a positioning module, for example, a Global Positioning System (GPS) module or a Global Navigation Satellite System (GNSS) module. The main memory unit 303 may include a computer-readable code relating to a navigation application, the navigation application together with the positioning module constituting the navigation module 307 such as to provide a navigation function. The navigation module 307 may incorporate a mapping application, or map data may instead be obtained over-the-air as required. The navigation module 307 may receive other information, such as traffic congestion information, over-the-air. Other information can be sent over-the-air, for instance one or more activation keys, certificates or licences, and are then stored in memory 303, 304.

The personal mobile apparatus 100 also comprises a USR FM transmitter module 308. The USR FM transmitter module 308 comprises an RDS module 308A which is operable to provide Radio Data System services within the USR effective transmission region 500 of the personal mobile apparatus 100. The RDS module 308A may be integral to the transmitter module 308. Alternatively, the RDS module 308A may be distinct from the transmitter module 308. The RDS module 308A may be purely software, or may also incorporate hardware. The RDS module 308A is operable, under the control of the processor 302, selectively to insert RDS data, including flags, into the radio signal output by the transmitter module 308. In this way, the RDS module 308A can insert TP and TA flags into the radio signal when they are required.

The personal mobile apparatus 100 also comprises an antenna 306. The antenna 306 is in communication with the transmitter module 308. The transmitter module 308 is operable to transmit radio signals via the antenna 306.

The personal mobile apparatus 100 according to this example embodiment of the invention also comprises an audio media player 309. The audio media player 309 may comprise a dedicated or shared module or alternatively may comprise an application being executed by the processor 302.

According to some example embodiments, the personal mobile device 100 may comprise a mobile telephone. Such embodiments include a cellular interface 311 as is shown on Figure 3. Other example embodiments, such as navigation devices or apparatus, may also include a cellular interface 311, for example, for receiving information relating to traffic flow update reports.

Personal mobile apparatuses 100 according to the invention are not limited to the above-described functionality and may include additional functionality and/or may not include all of the above described functionality. Additional functionality may be in the form of dedicated or shared module blocks or software applications resulting from computer-readable code executed by the processor 302. Examples of such additional functionality include an FM receiver, a camera, an internet connection and browser, and gaming applications.

The personal mobile apparatus 100 is operable to output audio data from the music player 309 as a radio signal via the transmitter module 308. When a receiver apparatus 600, such as an in-car radio system, is within the USR effective transmission region 500 of the transmitter module 308, the receiver apparatus 600 is able to receive the radio signal and output the associated audio data via associated speakers.

The personal mobile apparatus 100 is operable also to output audio data derived from other modules or applications. For example, the audio data received via the cellular interface 311, which would normally be output through an earpiece, may be output on a radio signal via the transmitter module 308. Similarly, audio data generated by the navigation module 307 may be output as a radio signal via the transmitter module 808.

Generally, personal mobile apparatuses 100 include loudspeakers of relatively low power. This is due in part to constraints resulting from size restrictions and also in part due to the need to conserve battery power. Consequently, audio outputs from personal mobile apparatuses 100 may not always be audible above ambient noise. This is particularly true when the apparatus 100 and the user are travelling in a car, where engine and road noise contribute to high ambient noise levels. This issue may be even more pronounced when the user is listening to audio, such as music, on the in-car audio system. The present invention provides a way to address this, and to allow a user of a personal mobile apparatus 100 to hear audio outputs from the apparatus 100 even when in a vehicle and when listening to audio via an in-vehicle audio system 600.

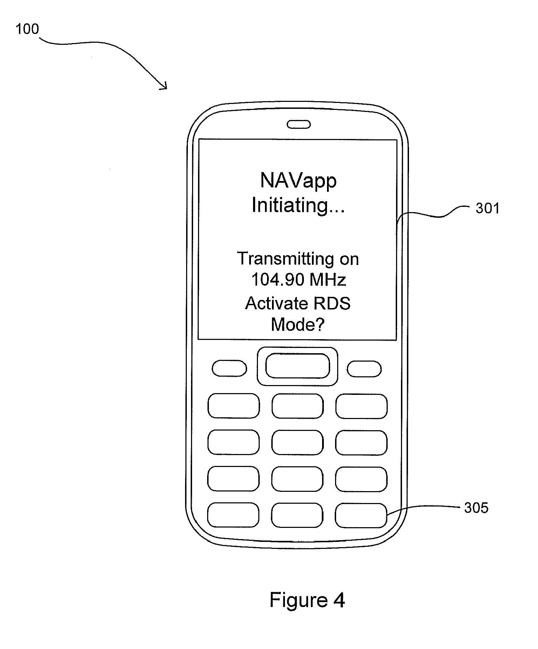

Figure 4 is a personal mobile apparatus 100 according to example embodiments of the invention. Visible in Figure 4 are the user input interface 305 and the display 301 of the personal mobile apparatus 100, although it also includes the components shown in Figure 3. In the example of Figure 4, a user has caused the apparatus 100 to initiate a navigation application. The user has also selected a mode wherein the apparatus 100 will output the audio data generated by the navigation application as a radio signal via the transmitter module 308. Currently displayed on the display 301 of the apparatus 100 is an indication of the frequency at which the radio signals will be transmitted. The display 301 also provides a question to the user as to whether or not RDS mode should be activated. The receiver apparatus 600 must be tuned to the same frequency as that at which the transmitter module 308 is transmitting, in this example 104.9 MHz, so as to allow the audio data to be received.

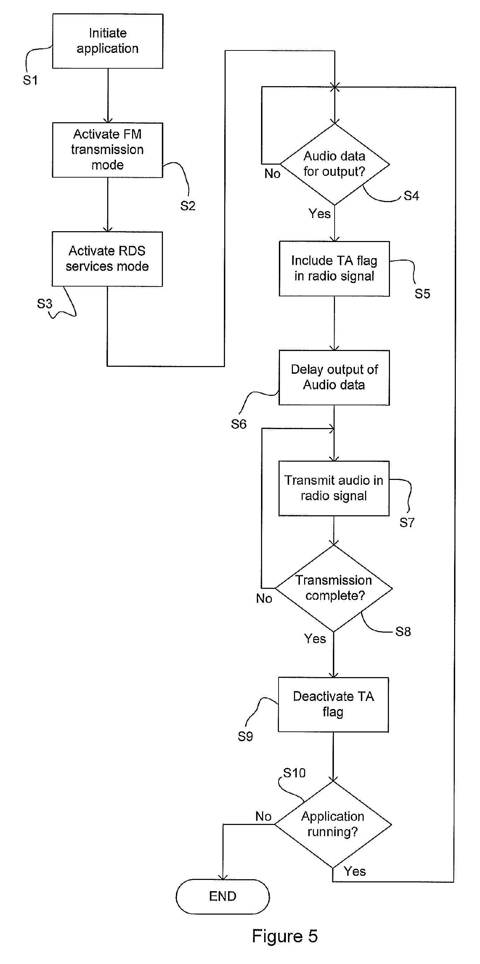

Figure 5 is a flow chart of an operation of the personal mobile apparatus 100 according to an example embodiment of the invention. Let us assume that the user has tuned their in-car radio to the frequency indicated on the display 301 of personal mobile apparatus 100 (i.e. 104.9 MHz), but is currently listening to another source of audio data, for example a CD.

In step S1, the processor 301 causes the initiation of an application, in this case the navigation application.

In step S2, the processor sets an "FM transmission mode" to active. In this mode, audio outputs generated by the application are output as radio signals via the transmitter module 308. The FM transmission mode may be activated automatically by the processor, for example if the personal mobile apparatus 100 is set to an "in-car mode". Alternatively, the processor 302 may provide the user with the option, upon initiating the application, as to whether or not to activate FM transmission mode. Audio outputs of the application occur in bursts, typically of a between 1 and 5 seconds duration, and are interposed with relatively long periods of silence. Audio outputs of the application are not continuous. The start of a burst is an event that can be used to trigger an action.

In step S3, the processor 302 causes an "RDS services mode" to become active. This may be activated in response to a user input or automatically in response to the application being activated. The processor 302 may prompt a user to provide an input by displaying a question such as "Activate RDS mode?" on the display 301 and providing the user with the choice of two options (i.e. "yes" and "no"). When "RDS services mode" is active, the personal mobile apparatus 100 is operable selectively to flag audio data bursts generated, or caused to be output, by the application. In some example embodiments, activation of the "RDS services mode" may include insertion of the TP flag into all transmitted radio signals. The TP flag indicates to receiver apparatus 600 that the personal mobile apparatus 100 is operable to transmit radio signals which include a TA flag.

In step S4, the processor 302 determines if the navigation application has generated audio data for output. Put another way, the processor 302 determines if the navigation application has initiated an audio data output event. Following a positive determination, the positive determination, the operation proceeds to step S5. A positive determination may be based on the processor 302 receiving a request from the navigation application indicating that it has an audio data bursts for output to the user. The receiving of the request is an event. Alternatively, the processor 302 may monitor the operation of the navigation application to identify when an audio data burst for output to the user is generated. The start of the audio burst is an event. Examples of audio data bursts that may be generated by the navigation application include, but are not limited to, instructions relating to directions to a destination and announcements regarding high traffic flow, the information for which may have been received via the cellular interface 311.

Following a negative determination in step S4, step S4 is repeated until a positive determination is reached.

The processor 302 operates under control of a software module to perform step S4. This software module may for instance be a thread or function of a software application or may be a feature or aspect of the operating system on which the terminal operates.

In step S5, the processor 302 causes the RDS module 308A to activate the TA flag within a radio signal being output by the transmitter module 308. The radio signal being output by transmitter module 308 may be such that it carries no useful data other than the TA flag data provided by the RDS module 308.

In step S6, which may be subsequent or simultaneous to step S5, the output to the transmission module 308 of the audio data burst is delayed. The duration of the delay may be in the region of, for example 1 to 3 seconds. Importantly, the delay should be such that the playback of the audio data in the burst is not truncated due to the receiver not yet being in radio playback mode at the start of transmission of the radio signal containing the audio data. The delay allows the receiver apparatus 600 to detect the presence of the TA flag in the radio signal from the transmission module 308 and to re-configure its operation accordingly. For example, in response to detecting the presence of the TA flag in a received radio signal, the receiver apparatus 600 may be required to pause the playback of a currently playing CD, to switch from CD playback to radio playback and to reset the playback volume to that associated with the playback of TA flagged audio data.

The delay may be implemented by the application itself. For example, the application may be programmed such that, when the "RDS services mode" is activated, the output of all generated audio data is delayed by a predetermined period of time. Alternatively, when the "RDS services mode" is activated, in response to determining that the navigation application has one or more audio data bursts for output (or, put another way, detecting an audio data burst event), the processor 302 instructs the navigation application to delay the output of the audio data for a suitable duration. According to other example embodiments, the processor 302 may delay transmission of the generated audio data by delaying the transfer of the generated audio data between the output of the navigation application to an input of the transmitter module 308. This may be implemented by transferring the audio data via a delay unit (not shown). The delay unit may include, for example, a buffer. Thus, the audio data may generated and provided by the navigation application in the usual way immediately following its generation but, instead of being transferred directly to the transmitter module 308, the audio data is written into the buffer of the delay unit and is subsequently read out of the buffer following a delay of a suitable duration.

In step S7, the audio data is caused to be transmitted as a radio signal by the transmitter module 308. The transmitted radio signal includes the TA flag data. This step includes forwarding of the audio data to the transmission module 308, encoding of the audio data into a radio signal and inclusion in the radio signal of the TA flag data.

Next, in step S8, the processor 302 determines if all of the audio data generated by the navigation application has been transmitted. Following a negative determination, the operation returns to step S7. The processor 302 may make this determination based on an indication from the navigation application that all of the audio data has been transmitted. Alternatively, the processor may monitor the transmitter module 308, for example a buffer (not shown) thereof, to determine when all of the audio data has been transmitted.

Following a positive determination in step S8 (i.e. a determination that all of the audio data generated by the navigation application has been transmitted), the operation proceeds to step S9, in which the RDS module deactivates the TA flag. In response to detecting the absence of the TA flag in the received signal, the receiver apparatus 600 discontinues radio playback, reverts to the previous volume level and continues playback of the CD from the point at which it was paused.

In step S10, the processor determines if the navigation application is still active. If the navigation application is still active, the operation returns to step S4. If, in step S10, it is determined that the navigation application is no longer active (i.e. that the navigation apparatus has been terminated) the operation ends. It will be understood that termination of the navigation application at any time between steps S2 to S10 may cause the operation to terminate.

Another event that is used to trigger an audio announcement by the navigation application might be an announcement of imminent expiry of a licence. For instance, if the navigation application determines that a stored licence, key or certificate (or other data) indicates that an amount of time remaining before expiry has fallen below a threshold, an audio announcement of "You have 7 days left before your licence expires" is generated by the navigation application. The provision of this audio burst is an event that is detected by the software module running on the processor 203, and causes the steps S5 onwards to be performed.

The above operation also may be carried out in respect of other applications instead of a navigation application. As such, the processor 302 may be operable to cause the RDS module 308A to provide RDS data in radio signals containing audio data generated by, for example, a messaging application or a call handling application. Thus, in one example embodiment, when a message, such as an SMS, MMS or an e-mail, is received at the personal mobile apparatus 100, the processor 302 may detect, in any suitable way, that the messaging application has audio data corresponding to a message alert for output via the transmitter module 308. In particular, the event of a message alert being indicated is detected by the relevant software module executed by the processor 302. In response to this, the processor 302 may cause the RDS module 308A to insert RDS data corresponding to the TA flag in the radio signal output via the transmitter module 308. It will be understood that, similarly to step S6 described above, a sufficient delay may be inserted following setting of the TA flag and prior to transmitting, in the radio signal, the audio data corresponding to the message alert. Similarly to steps S8 and S9 described above, subsequent to a determination by the processor 302 that all of the audio data corresponding to the message alert has been transmitted, the processor 302 may cause the RDS module 308A to deactivate the TA flag. In other example embodiments, the TA flag may be utilised to cause an incoming call alert event and subsequent incoming voice data to be output via receiver apparatus 600 such as an in-car radio. In such embodiments, the TA flag may be caused to be activated in response to the detection of an incoming call. The TA flag subsequently may be deactivated in response to a determination that the call has been terminated.

As discussed with reference to step S3, the processor may be operable automatically to activate the "RDS services mode". According to some example embodiments, the processor 302 may be operable automatically to activate the "RDS services mode" only in respect of certain pre-identified applications. For example, the user may be able to pre-select those applications for which the "RDS services mode" should be activated automatically. The identities of these applications may be stored in a memory, such as memory 303. Thus, the user may require that "RDS services mode" is activated automatically for a first set of applications, but that it is not activated automatically in respect of a second set of applications. For example, the user may require that "RDS services mode" is activated automatically for a call handling application and a navigation application, but not in respect of, for example, a battery monitoring application which outputs an audible alert when the battery charge level is low. As such, in step S3 the processor 302 may compare the identity of the application currently being executed with a pre-defined list of applications for which automatic activation of the "RDS services mode" is required. If the currently executed application is present in the pre-defined list, the processor 302 may automatically cause the activation the "RDS services mode". According to some example embodiments, if the currently executed application is not in the predefined list, the processor may ask for a user input as to whether "RDS services mode" should be activated.

According to some example embodiments, the processor 302 may be operable to alter the volume associated with audio data that is transmitted along with a TA flag. The alteration of the volume may be based on the identity of the application being executed. For example, the user may pre-define that audio data generated by the navigation application is to have a higher volume level than audio data generated by, for example, the messaging application.

In example embodiments in which the timing of the transmission of audio data burst is not important, the audio data bursts may be queued and transmitted sequentially at a suitable time. As in the above embodiments, the TA flag is used to flag the audio data burst as being of high priority.

In the above example embodiments, the invention is described with reference to an FM transmission system utilizing RDS or RBDS. However, it will be understood that flagging of audio bursts having high priority may alternatively be implemented into different systems. Some embodiments involve a digital radio transmission environment, such as Digital Audio Broadcast (DAB).

Embodiments of the present invention provide the advantage that audio data bursts provided by the personal mobile apparatus 100 can be identified by radio receivers as being of high priority to the user and so can be communicated so the user via the radio receiver even if the receiver is not currently set to output received radio signals. This may be advantageous to drivers of cars who are using a navigation function of their personal mobile apparatus, while simultaneously listening to a different source of audio data through the in-car audio system. Also, the present invention is backwards compatible with many existing radio receivers.

Embodiments of the present invention may be implemented in software, hardware, application logic or a combination of software, hardware and application logic. In an example embodiment, the application logic, software or an instruction set is maintained on any one of various conventional computer-readable media.

For the purpose of this specification, the term "module" could comprise software, hardware, application logic or a combination of software, hardware and application logic.

Reference to "computer-readable storage medium", "computer program product", "tangibly embodied computer program" etc, or a "processor" or "processing circuit" etc. should be understood to encompass not only computers having differing architectures, for example as single/multi processor architectures and sequencers/parallel architectures, but also specialised circuits such as field programmable gate arrays (FPGA), application specify circuits (ASIC), signal processing devices and other devices contained in an apparatus. References to computer program, instructions, code etc. should be understood to express software for a programmable processor firmware such as the programmable content of a hardware device as instructions for a processor or configured or configuration settings for a fixed function device, gate array, programmable logic device, and/or the like within such an apparatus.

According to some example embodiments of the invention, some of the steps of the operation of Figure 5 may be performed in a different order from that in which they are described above. For example, steps S3 and S4 may be performed simultaneously.

It should be realised that the foregoing embodiments should not be construed as limiting. Other variations and modifications will be apparent to persons skilled in the art upon reading the present application. Moreover, the disclosure of the present application should be understood to include any novel features or any novel combination of features either explicitly or implicitly disclosed herein or any generalisation thereof and during the prosecution of the present application or of any application derived therefrom, new claims may be formulated to cover any such features and/or combination of such features.

## Claims

1. A portable apparatus comprising:
at least one processor configured under control of a software module to detect events and to be responsive to the detection of an event to provide an audio data burst;
a radio transmitter configured to encode the audio data burst and to transmit the resulting encoded audio data as part of a radio signal; and
a priority flagging module responsive to the provision of an audio data burst by the software module to flag the encoded audio data so as to indicate to a receiver a priority of the audio data burst.

2. The portable apparatus of claim 1, wherein the priority flagging module comprises a radio data service or radio broadcast data system module.

3. The portable apparatus of claim 1 or claim 2, wherein the priority flagging module is configured to flag the encoded data by inserting a travel announcement flag into the radio signal.

4. The portable apparatus of any preceding claim, wherein the priority flagging module is configured to be responsive to activation of a radio data system or radio broadcast data system services mode to insert a travel program flag into the radio signal.

5. The portable apparatus of any preceding claim, wherein the priority flagging module is configured to flag the radio signal for a predetermined duration prior to transmission of the encoded audio data.

6. The portable apparatus of claim 5, wherein the audio data burst is stored in a buffer for the predetermined duration or wherein provision of the audio data burst by the at least one processor is delayed for the predetermined duration.

7. The portable apparatus of any preceding claim, wherein the transmitter comprises a Frequency Modulated transmitter or a digital radio transmitter.

8. The portable apparatus of any preceding claim, comprising a stored activation key or certificate.

9. The portable apparatus of any preceding claim, wherein the apparatus is a mobile telephone.

10. A method comprising portable apparatus:
detecting an event;
responding to the detection of the event by providing an audio data burst;
encoding the audio data burst;
priority flagging the resulting encoded audio data so as to indicate to a receiver a priority of the audio data burst; and
transmitting the resulting flagged encoded audio data as part of a radio signal.

11. The method of claim 10, comprising priority flagging the resulting encoded audio data by inserting a travel announcement flag into the radio signal.

12. The method of claim 10 or claim 11, comprising responding to activation of a radio data system or radio broadcast data system services mode by inserting a travel program flag into the radio signal.

13. The method of any of claims 10 to 12, comprising priority flagging the radio signal for a predetermined duration prior to transmitting the resulting flagged encoded audio data as part of the radio signal.

14. The method of claim 13, comprising storing the audio data burst in a buffer for the predetermined duration or delaying provision of the audio data burst for transmission for the predetermined duration.

15. Computer-readable code, which when executed by at least one processor causes, the at least one processor to perform the method of any one of claims 10 to 14.
